Europäisches Patentamt

European Patent Office

Office européen des brevets

(11) Publication number: **0 292 647**
**A2**

# EUROPEAN PATENT APPLICATION

(21) Application number: 88102729.6

(51) Int. Cl.⁴: **G06F 3/023**

(22) Date of filing: 24.02.88

The title of the invention has been amended (Guidelines for Examination in the EPO, A-III, 7.3).

(30) Priority: 01.04.87 US 34294

(43) Date of publication of application:
**30.11.88 Bulletin 88/48**

(84) Designated Contracting States:
**DE FR GB**

(71) Applicant: **International Business Machines Corporation**
**Old Orchard Road**
**Armonk, N.Y. 10504(US)**

(72) Inventor: **Hearin, Karen Kastner**
**12215 Cabana Lane**
**Austin Texas 78727(US)**
Inventor: **James, Wendy Sue**
**13113 Amarillo Avenue**
**Austin Texas 78729(US)**

(74) Representative: **Grant, Iain Murray**
**IBM United Kingdom Limited Intellectual Property Department Hursley Park**
**Winchester Hampshire SO21 2JN(GB)**

(54) **Operator assistance method for data processing.**

(57) In a computer program requiring an instruction statement having commands arranged in a predefined syntax, an aid is incorporated to help an operator in constructing the instruction statement by causing the displaying of a first screen portion having a plurality of command areas, a designation of one of the command areas, and a second screen portion of input data alternatives for the designated command area; and, upon receiving information from the operator containing input data for the designated command area, the updating of the first screen portion to reflect such input data, the designating of a next command area and the changing of data alternatives of the second screen portion to a set appropriate to such next command area; the latter operations being repeated until all of the commands for the instruction statement have been input whereby the command is aggregated in a manner conforming to the predetermined syntax even though the operator may be unaware of that syntax. As a preliminary set-up operation, a prior display is progressively created repeatedly prompting the operator to provide input data and displaying such input data received from the operator in response to the menu, this prior display being wiped, when complete, and replaced by the two screen portion display of the preceding claims which is generated from the cummulative prior input operator data.

## OPERATOR AIDED DATA PROCESSING

This invention relates to operator aided data processing whereby the operator is automatically assisted when entering instruction statements having a complex syntax.

Certain computer programs involve the use of a high order language having a complex syntax. The existence of this complex syntax requires the program user or operator to learn the specifics of the syntax in order that the instructions provided in this language will be properly interpreted by the computer program. One such complex syntax language is the Structured Query Language (SQL) detailed in the Draft Proposal, ANS Database Language SQL, Standard X3.135-1986, American National Standard Institute, Inc., 1430 Broadway, N.Y., N.Y. 10018 (herein incorporated by reference). SQL is used in data base management programs. Specifically, select statements in SQL provide an operator with the capability to retrieve data from several different data base tables. However, the complexity of the syntax requirement for SQL may be an obstacle preventing an operator from efficient use of this data base management program.

Common techniques for assisting an operator with the execution of a program include providing help screens. Normally the help screen is provided upon a request by the operator. An example of a program providing a help screen is the product IBM Filing Assistant. When executing the Filing Assistant program, the operator may request a help screen to provide assistance information during different phases of the program execution. Pages 2-18 of the Filing Assistant manual detail how the operator requests assistance.

The following references also detail techniques for providing assistance to operators executing complex computer programs. IBM Technical Disclosure Bulletin, Vol. 27, No. 10B, March 1985, page 6127, entitled "Contextual Help Facility for Interactive Systems" and another IBM Technical Disclosure Bulletin, Vol. 27, No. 10B, March 1985, page 6136, entitled "Method for Displaying Contextual Help in Interactive Systems" details an assistance scheme that allows operator interaction while a help screen is being viewed.

IBM Technical Disclosure Bulletin, Vol. 25, No. 3B, August 1982, pages 1785-1786, entitled "Menu and Command Language Interface for Information Processing System" discloses a technique to allow an operator to interact with a menu in a manner allowing the operator to provide multiple menu inputs without having to interact with each menu individually in the menu hierarchy.

IBM Technical Disclosure Bulletin, Vol. 29, No. 1, June 1986, pages 334-337, entitled "Document Composition Instructions" discloses a technique for providing a help menu allowing the operator to select items from the help menu or independently provide instructions directly to the computer.

IBM Technical Disclosure Bulletin, Vol. 23, No. 2, July 1980, pages 806-811, entitles "Menu Display System" discloses a generalised menu function that can be customised for different application programs.

IBM Technical Disclosure Bulletin, Vol. 18, No. 3, August 1985, pages 665-669, entitled "Data Base Retrieval System" discusses a general data base retrieval system program including a capability for the entry of new items, the modification of existing data, and building of reports.

IBM Technical Disclosure Bulletin, Vol. 27, No. 10B, March 1985, page 6082, entitled "Command-Like Facility" discloses a technique of providing a command line including a list of possible commands for selection by an operator.

IBM Technical Disclosure Bulletin, Vol. 28, No. 11, April 1986, pages 5124-5125, entitled "Improved Text Editor Command Entry on Unintelligible Display Stations" discloses a technique of designating commands by using a cursor.

IBM Technical Disclosure Bulletin, Vol. 25, No. 7A, December 1982, pages 3249-3251, entitled "Method for Incorporating Data Base Definitions on a Display Record Format" discloses a technique for copying field descriptions into a data base record format.

U.S. Patent No. 4,531,918, entitled "Apparatus For The Interpretation of Various Steps of An Interactive Computer Program and a Method of Using Such Apparatus" discloses an external device to aid an operator by providing information necessary for a computer program execution.

It is an object of the present invention to provide an aid for assisting an operator in constructing instruction statements having complex syntax requirements.

In accordance with the present invention, there is provided data processing apparatus arranged to execute complex instruction statements if such conform to a predetermined syntax whether presented unitarily as such or aggregated by interaction between the operator and an incorporated aid, the apparatus including both operator input means and display means, the aid, when used, causing

the displaying of a first screen portion having a plurality of command areas, a designation of one of the command areas, and a second screen portion of input data alternatives for the designated command area;

upon receiving information from the operator containing input data for the designated command area, the updating of the first screen portion to reflect such input data, the designating of a next command area and the changing of data alternatives of the second screen portion to a set appropriate to such next command area; and

the latter operations being repeated until all of the commands for the instruction statement have been input whereby the command is aggregated in a manner conforming to the predetermined syntax even though the operator may be unaware of that syntax.

One embodiment of the present invention disclosed hereinafter displays a series of overlapping command screens to the operator. The operator is prompted to provide an input on each screen. The overlapping screens show a history of inputs by the operator at a point where the operator is to input an instruction statement. The overlapping screens will be removed from the display and in its place will be provided a first screen portion detailing a set of command areas where each command area requires an individual input by the operator. The operator is allowed to only input information for one command area at a time. This command area input is designated by the location of a cursor. For each designated command area, a second portion of the screen is provided that includes information to assist the operator in providing the input data for the command area. In one aspect of this preferred embodiment, the operator may move the cursor from the first portion of the screen to the second portion of the screen to designate a listed alternative in the second portion. The operator may also move the cursor in the first portion of the screen from one command area to another. Upon the redesignation of a command area by the movement of the cursor, the second portion of the screen will display assistance information for the newly designated command area. This allows the operator to provide command information in any sequence so desired. Once all the command information has been provided, the computer program will removethe first and second portions from the display and construct the instruction statement from the input data provided by the operator. In another aspect of the present invention, this instruction statement constructed in accordance with the proper syntax, will be displayed to the operator. Once constructed, the instruction statement is then executed and the requested information is provided to the operator.

The present invention will be described further by way of example with reference to one embodiment thereof as illustrated in the accompanying drawings in which:-

Figures 1A, 1B, 1C, 1D, 1E and 1F are flow charts illustrating the procedure for prompting the operator to provide input data and providing the operator with information to assist in a designation of the input data;

Figure 2 is a drawing illustrating the appearance of the display screen to the operator and including the overlapping windows that each prompt the operator for input information;

Figure 3A is a drawing illustrating the appearance of the display screen having a first portion displaying several command areas and a second portion displaying assistance information for the first designated command area;

Figure 3B is a drawing illustrating the appearance of the screen with the cursor in the first portion at a second command area and the screen second portion displaying assistance information for the second designated command area;

Figure 3C is a drawing illustrating the appearance of the screen when the cursor is located at a third command area and the second portion displaying assistance information for this third designated command area;

Figure 4 is an illustration of the original data base table;

Figure 5 is an illustration of the completed SQL instruction statement;

Figure 6 is an illustration of the resulting data retrieved from the execution of the instruction statement; and

Figure 7 is a block diagram illustrating the interaction with a data base program.

The present invention provides data processing apparatus including an operator aid enabling the operator to provide instruction statements to a computer program where the instruction statements are required to be in a predetermined syntax form. The purpose of this aid is to enable the operator to provide these instructions without knowledge of this predetermined syntax. In other words, this aid provides a "user friendly" interface to the computer program. The embodiment disclosed relates to a relational data base product. However, it should be apparent to those skilled in the art that the invention can be applied to any application program having a complex syntax requirement for its respective command language.

In this example, it is assumed that the operator is required to provide an instruction to the relational data base program in order to obtain certain information. For an example, the operator needs a report listing of all the employees named Smith in alphabetical order by first name with their employee numbers. Those knowledgeable in the use of the Structured Query Language (SQL) are able to provide a single instruction to perform this function. However, those not familiar with SQL would not easily be able to provide the instruction in accordance with the proper syntax to accomplish this task. The embodiment of this invention illustrates the ease at which the operator may provide information in response to display screen prompts to obtain the desired result, i.e., the proper SQL instruction. Once the proper SQL instruction is available, the data base program will execute this instruction and provide the information requested.

Data base management programs that respond to SQL statements are presently available. Examples of existing SQL data base programs are IBM's product DB2 and SQL/DS.

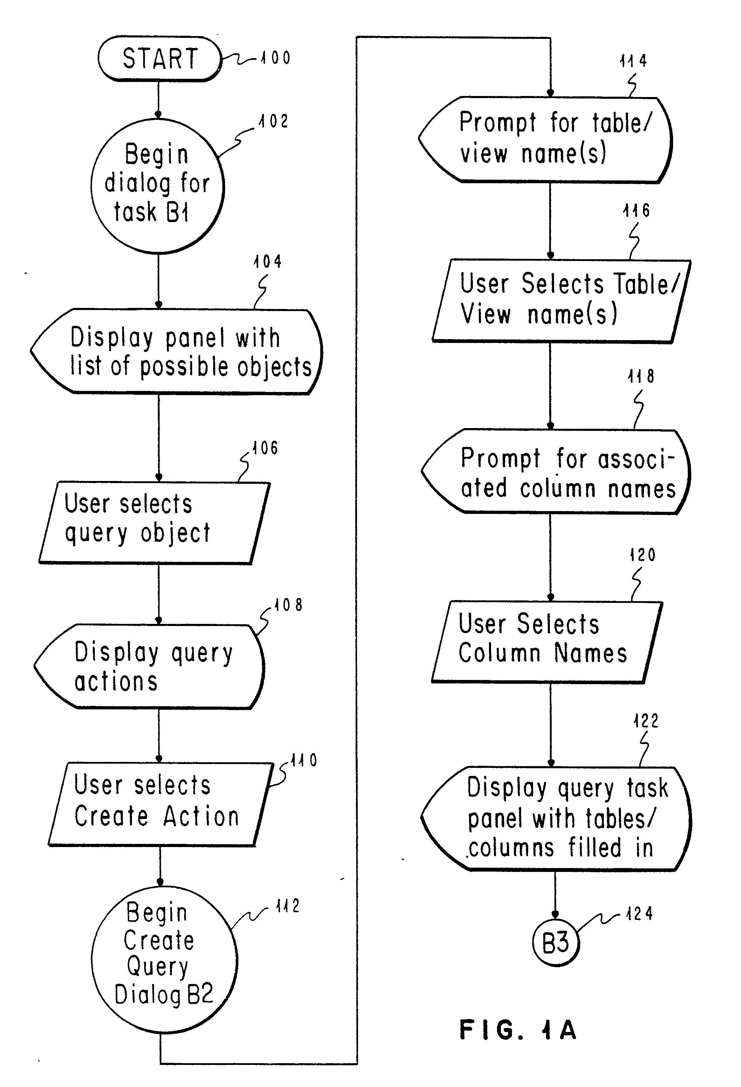

The embodiment to be discussed is the user interface that enables the operator to provide the instruction in the proper syntax to enable the data base program to accomplish the desired task. Figures 1A through 1F illustrate in flow chart form the interface software provided to aid the operator in providing the instruction. The operator actually views screens on a display. Figure 2 illustrates one such screen. The display area 10 of Fig. 2 actually includes four different screen areas or windows that have been consecutively displayed to prompt the operator to provide certain input data. The first window 12 asks the operator to provide an input detailing the overall object instruction type. The operator had indicated that the operator required a query input as evidenced by pointer 14. This query indication means that the operator desires to provide a query instruction in SQL to the data base program in order to perform a task. In response to the query indication, the program will respond with a second window 16 that asks the type of action 18 to be performed on the query to be specified. The operator has responded by indicating a create task is to be accomplished. This is indicated by pointer 20. The invention responds with window 22 requesting the name of a table or view for the query. The list of tables and views 24 gives the operator the possible choices. The operator has responded by indicating Table1 as evidenced by pointer 26. This indication of Table1 means that the query instruction is to be used to operate on Table1 to provide the requested information. The user interface responds to the indication of Table1 with window 28 which lists the column names in Table1 and asks which of these columns names 30 are to be included in the requested information. The operator has selected LAST_NAME, FIRST_NAME, and EMPLOYEE_NUM as evidenced by the pointers 32.

The user interface screen 10 also includes a command section 39 that lists the availability of three commands; help, catalog and commands, to be selected at any time by the operator. These commands are selected by depressing the appropriate function key on the keyboard.

After the information in the progressively built-up screen 10 has been obtained, the display is cleared and screen 10 is replaced with screen 40 (Fig. 3A). Screen 40 consists of two portions; a first portion 42 requesting specific information and a second portion 44 detailing help or assistance information to the operator. Also note that area 45 is provided with a list of possible commands for the operator.

The user or the operator provides input data to screen portion 42 by directing a cursor 52 to a specific area and keying input data. In response to the location of the cursor 52, screen portion 44 changes to display assistance information to the operator for that one cursor location area. As the cursor is thus moved through the command areas in screen portion 42, the assistance information changes (see the difference between Figs. 3A, 3B and 3C).

Returning to Fig. 1A, the flow chart of the user interface software will be discussed in reference to Figs. 2, 3A, 3B and 3C. In Fig. 1A, a program starts at step 100 and proceeds to step 102 to begin the dialog for the task, i.e., to begin receiving the user input information to determine the desired task to be accomplished by the data base software.

In step 104, the software displays the panel with a list of possible objects. This corresponds to screen 10 (Fig. 2) object list 12. In step 106, the user selects the query object (pointer 14, Fig. 2).

In response to this selection of the query action, the software displays the specific alternative actions 16, list 18 in step 108. In step 110, the user selects the create action (pointer 20 in Fig. 2). At this point, 112, the software begins the create action. In step 114, the user is asked to determine which of the tables or views are to be the subject of this query (screen 22, list 24, Fig. 2). In step 116, the user selects TABLE1 as indicated by pointer 26 (Fig. 2).

In step 118, the user is then prompted to provide the column names from the Table that are desired to be included in the requested information (screen 28, list 30 of Fig. 2). In step 120, the user indicates which column names are to be included, pointers 32 of Fig. 2.

In step 122, the user interface then displays the query task panel with Table1 listed and the column names listed in order to prompt the operator for further information in determining the appropriate SQL instruction. This panel appears as screen 40 of Fig. 3A. The three column names selected by the user are displayed at the top of screen portion 42 in locations 46, 48, and 50. Cursor 52 is prompting the operator to add another column name or to select one of the possible options 64 in screen portion 44. If the user determines that none of the options are required, the cursor 52 should be moved. Since TABLE1, location 54 has already been listed as the source of information, the user may move the cursor to location 56 to specify the qualification sequence in TABLE1.

The user interface software in Figs. 1A and 1B proceeds from step 122 through connector 124 to step 126. In the above example, the cursor location 52 is displayed underneath the list of column names 46, 48 and 50. The user has desired not to provide any additional information, step 128. The user interface program proceeds to step 132. Since the user has not provided any information, step 132 proceeds to step 136 to determine if the user has moved the cursor 52.

In Fig. 3B, the cursor has been moved to location 66. In location 66, the screen portion 68 now displays a new list 70 of possible options. In Fig. 3B, the operator has specified LAST_NAME = "SMITH". Therefore, as the user types in the information, step 132, the information is displayed to the user in step 134. One alternative to the present invention enables the user to move the cursor from screen portion 42 to screen portion 68 in Fig. 3B. By moving the cursor in screen portion 68, the user may select one of the list of options 70 by moving the cursor to that option and hitting a designated key, such as the return key.

When the user has completed inputting the information, the user again moves the cursor. In Fig. 3C, the cursor has been moved to location 74. Screen 72 lists the two options available to the user. At this point in this example, the operator or user has completed specifying the information desired by typing FIRST_NAME ASCENDING. The operator or user must then specify one of several commands such as save 78 which would store the resulting SQL instruction. The operator may also view the resulting instruction by choosing the view SQL command 76. (Other commands available, such as run, may be selected by depressing the F6 key for a list of options 79.)

In Fig. 1B, the user interface software, in step 138, determines if a save command has been designated. If not, in step 144, the software determines if a run command has been indicated. Returning to step 138, if a save command has been received from the operator, the input provided by the user or operator is converted to a SQL syntax instruction in step 140. The conversion of the SQL syntax instruction will be discussed later. Once the instruction has been converted, it is saved in step 142.

In step 144, if the user or operator has indicated a run command, the software in step 146, converts the input data to a SQL instruction. This instruction is provided to the data base software which in response provides results. The results are displayed to the user in step 148.

In step 150 the software determines if the operator or user wishes to end this specific dialog. If not, the operator is returned to screen 40, Fig. 3C, in order that further inputs may be provided.

If, in step 150, the user or operator decides to end the process, the software proceeds to node 102 to begin a new dialog.

Returning to Fig. 3C, the user has specified that TABLE1 is to be queried for all employees with the last name of Smith. The Smiths are to be ordered by first name in ascending order. The total report is to include the last name, the first name and the employee number.

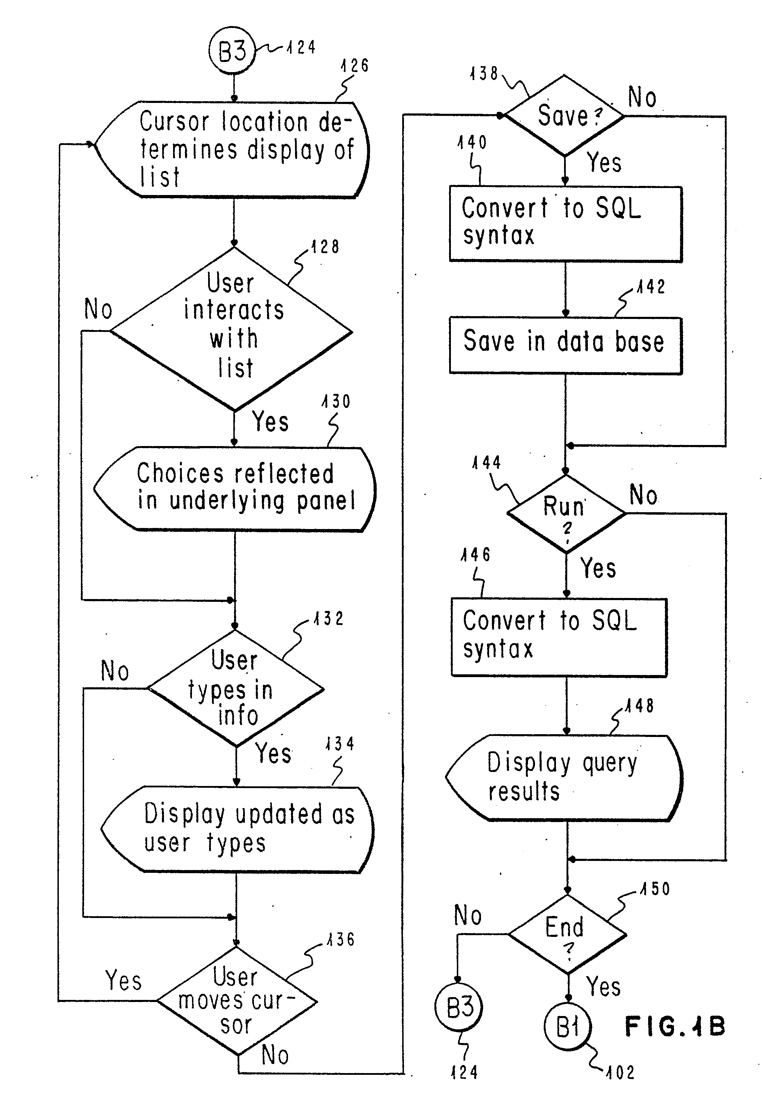

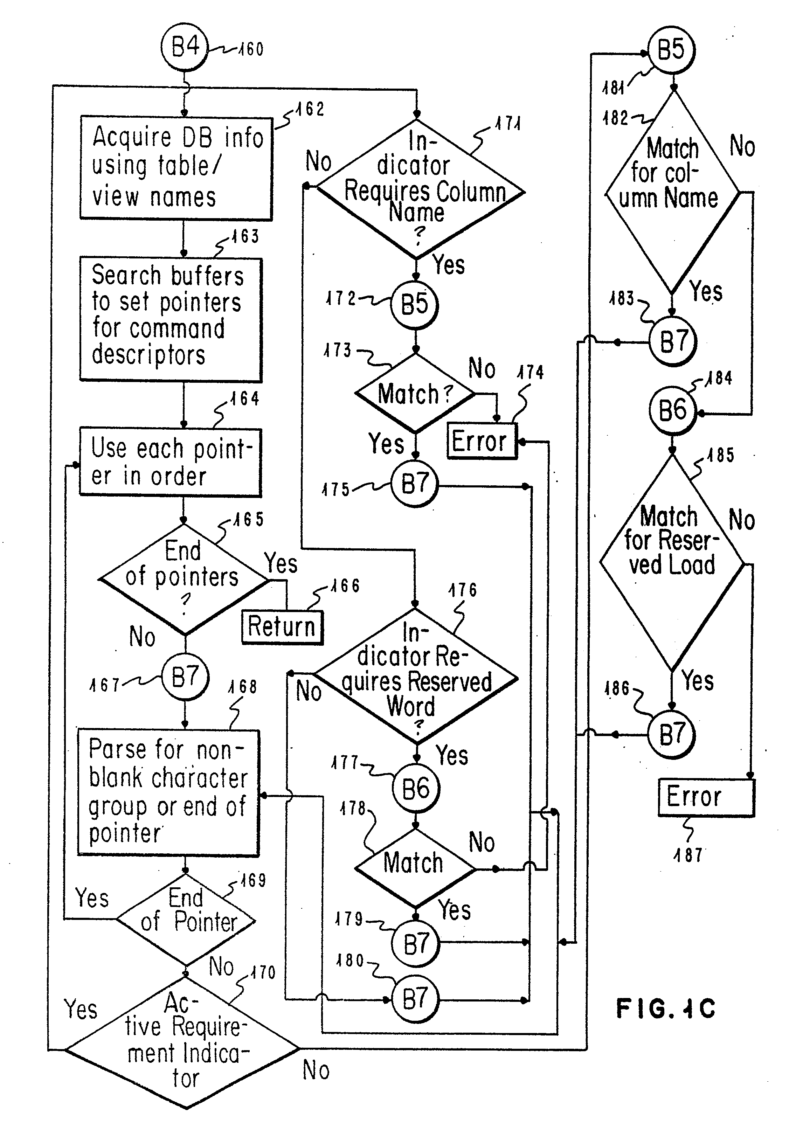

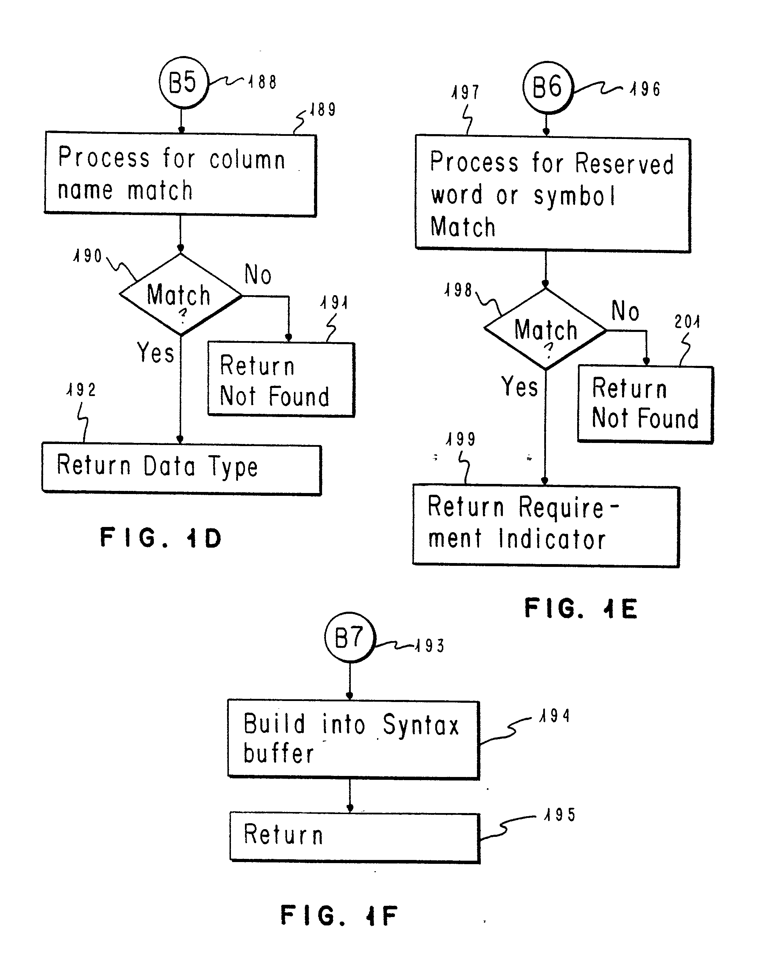

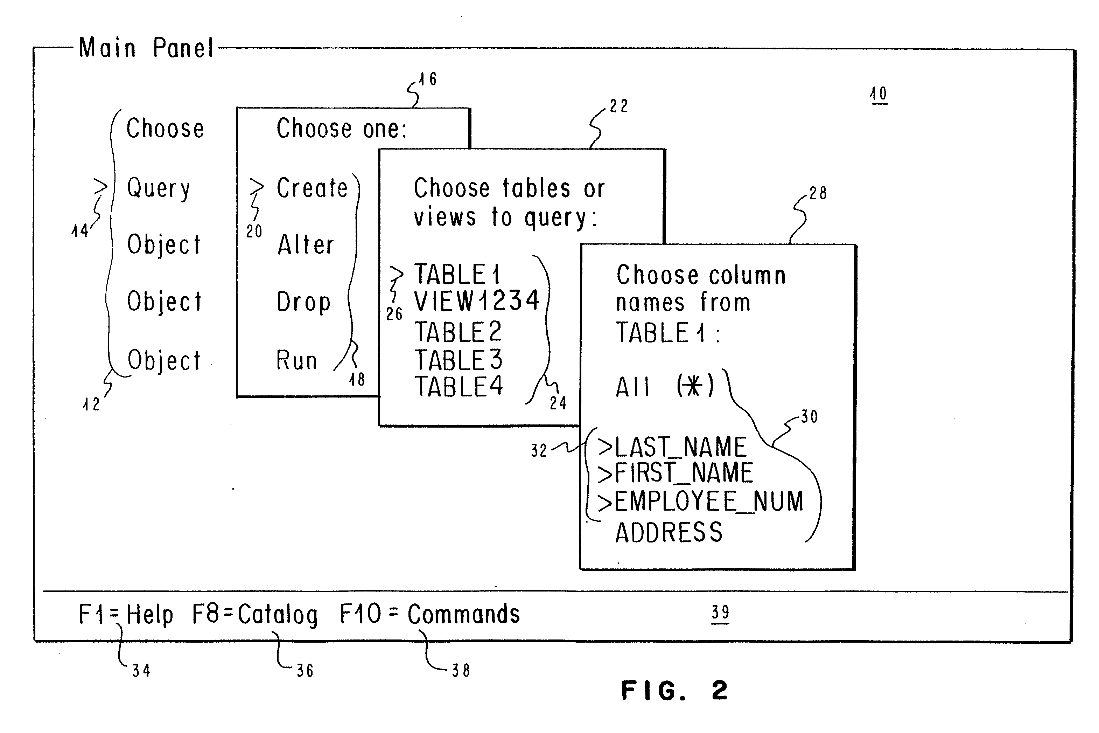

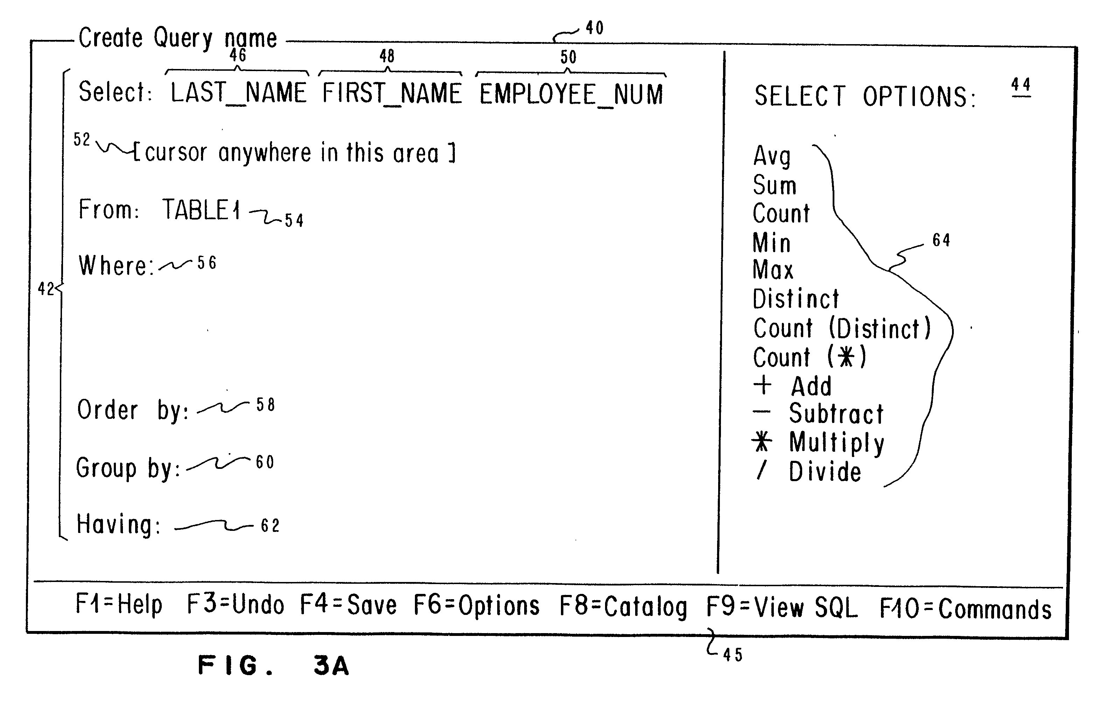

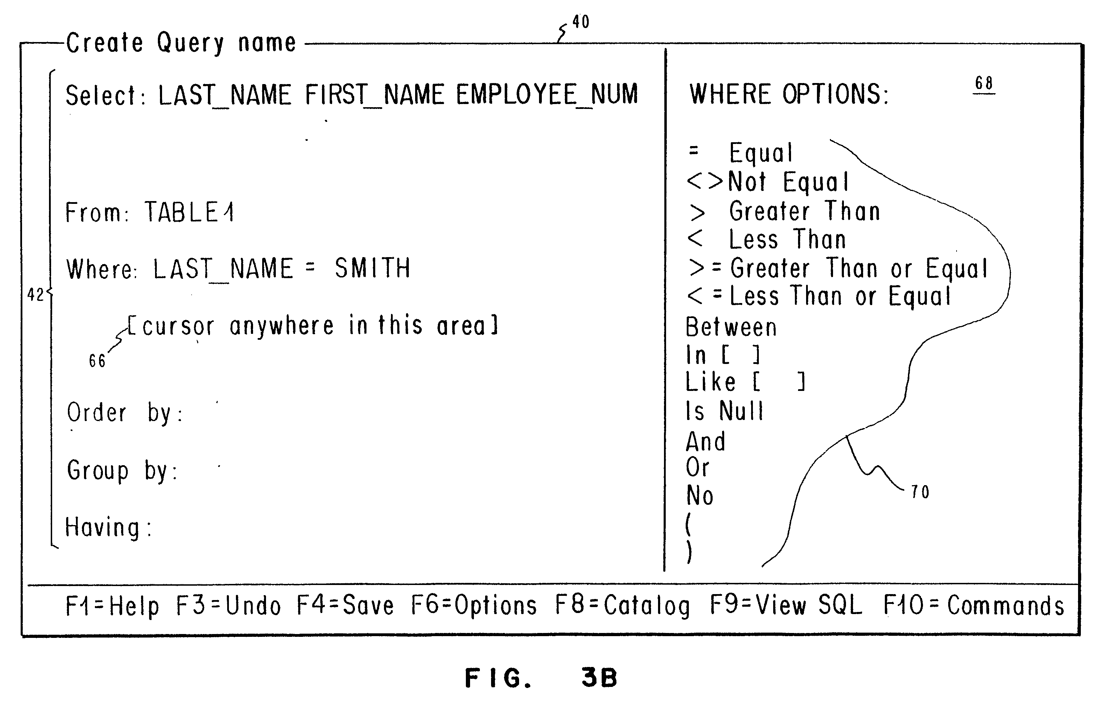

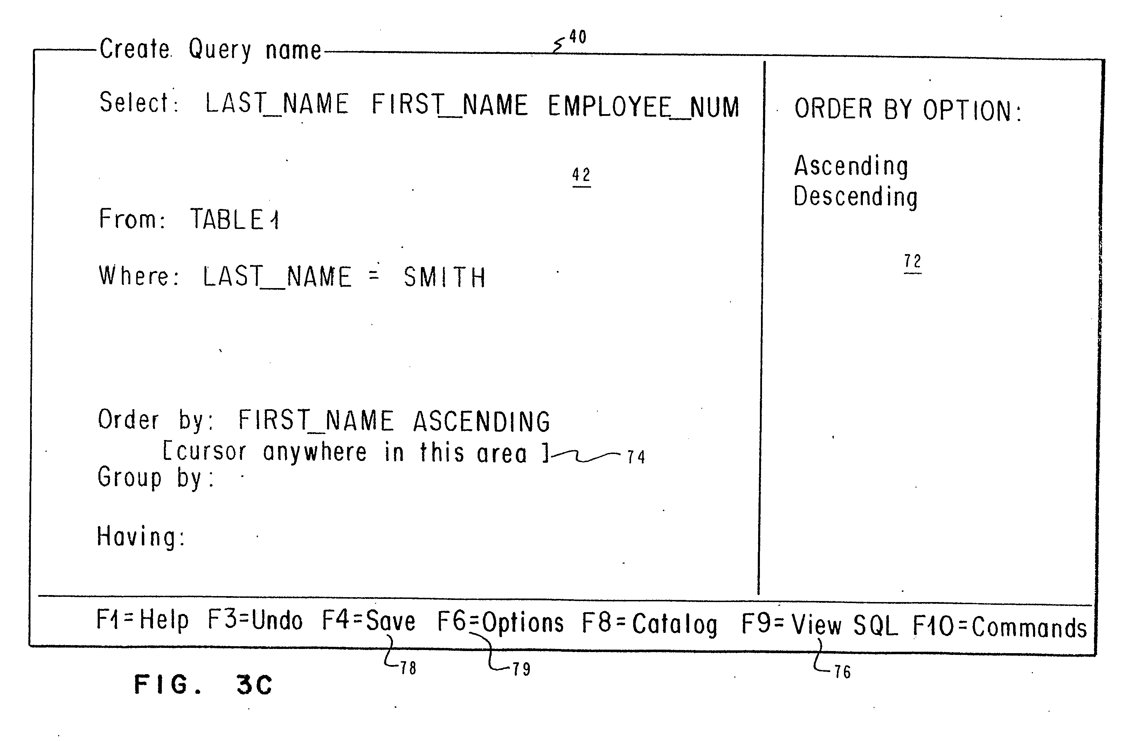

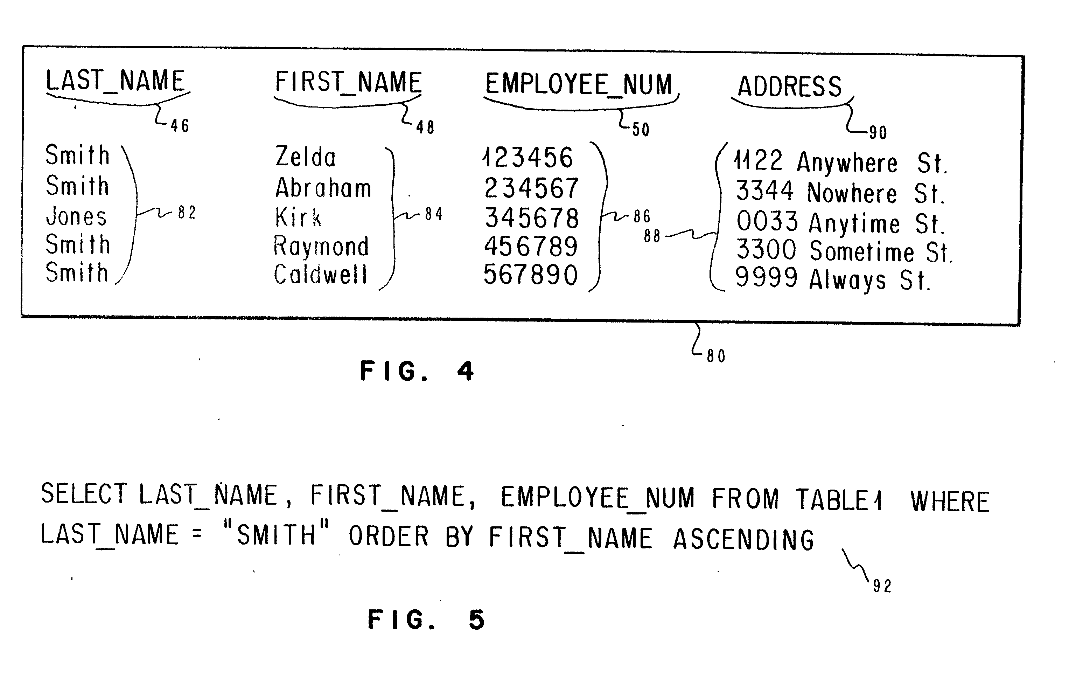

Figure 4 illustrates the contents of TABLE1 including column names of LAST_NAME 46, FIRST_NAME 48, EMPLOYEE_NUM 50 and ADDRESS 90. The last names are contained in list 82, the first names are contained in list 84, the employees numbers in list 86 and the addresses in list 88.

The input information from the screen 40 in Fig. 3C is converted into a SQL instruction. This instruction 92 is illustrated in Fig. 5.

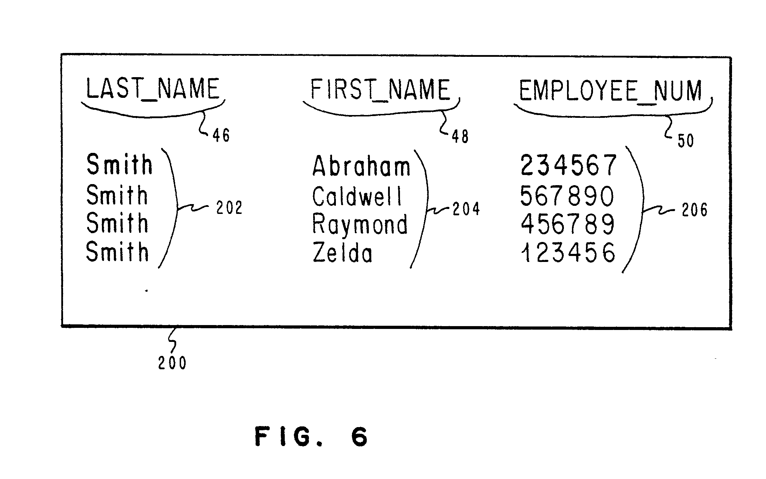

The execution of the SQL instruction of Fig. 5, results in the display of information 200 of Fig. 6. This includes the column names 46, 48 and 50 together with the list 202 of last names, the list 204 of first names in ascending order, and the list 206 of the respective employee numbers.

Figs. 1C, 1D, 1E and 1F illustrate the conversion of the operator or user supplied input information into a SQL instruction in accordance with the predetermined syntax (steps 140 and 146 of Fig. 1B). In Fig. 1C, at the end of the operator or user input sequence, the sequence begins through node 160 to step 162 to acquire the data base information that has been specified as a view or table name. In step 163, the buffers in the software are searched to set the pointers for the command descriptors. The command descriptors are the items in screen 42 (Fig. 3C) such as "select", "from", "where", "order by", "group by", and "having". The software proceeds to step 164 to use each pointer for each of the command descriptors in order.

In step 165, the software determines if the end of pointers has been reached and if so proceeds to step 166 to return to either step 142 or 148. If not, the software proceeds to node 167 (see Fig. 1F). Node 167 corresponds to node 193 (Fig. 1F) to direct the software into step 194 to build any input information into the syntax buffer. The process proceeds with step 195 to return, in this example to step 168.

In step 168, the field is parsed for non-blank character groups or for an indication of end of pointer. Referring to the present example in Fig. 3C, the first set of characters to be parsed would be the LAST__NAME column name. As a result of 168, the software proceeds to decision step 169 to determine if this is an end of pointer, in the present example for LAST__NAME, it is not. In step 170, the software determines if a required indicator is active, i.e., if there has been an item input that requires additional data such as "=". In the present example, there has not. Therefore, the software proceeds to node B5 step 181 (Fig. 1C).

Node 181 conforms to node 188 of Fig. 1D in the present example. The process proceeds to step 189 to process the column name to determine if in fact there is a match in step 190. If there is no match, the process proceeds to step 191 to return a message that there is no column name that matches. However, in the present example, the last name is a column name in TABLE1 so the process goes to step 192 to return the data type of the information in that column. Returning to step 182 (Fig. 1C) a decision is made as to whether there was in fact a match for the column name, if so the process proceeds to node 183, corresponding to node 193 of Fig. 1F. In step 194 this information is placed into the syntax buffer and the process returns in step 195. In our example, this would mean that the software would return to step 168 to parse the next non-blank character group. In this present example, FIRST__NAME.

In the present example, after LAST__NAME, FIRST__NAME and EMPLOYEE__NUM have been read and properly placed in the syntax buffer, the end of pointer would be reached. In step 169, this would redirect the software execution to step 164 to use the next pointer in order.

In Fig. 3C, where the specification of last name is to be equal to Smith (LAST__NAME = SMITH), the process through Fig. 1C is slightly changed. After "Smith" is parsed in step 168, the software proceeds through step 169 to step 170. In step 170 it is determined that there is an active requirement indicator, i.e., that "=" sign encountered previously in the reserved word list. It should be apparent to one skilled in the art, that this example specifically requires an alphanumeric value and not a column name. As a result, the software proceeds to step 171 to determine if the indicator requires a column name. If so, the process proceeds through node B5 (Fig. 1D previously discussed) to determine if there is a match in step 173. If there is no match, then an error message is provided to the user in step 174. If there is a match, the syntax is updated in step 175 (Fig. 1F) and the process returns to step 168.

Returning to step 171, if the indicator does not require a column name, the process goes to step 176 to determine if the indicator requires a reserved word. If so, the process continues to node B6, step 177. Node 177 at this point corresponds to node 196 of Fig. 1E. The process advances to step 197 to determine if the reserved word is a word contained in the SQL syntax reserved word list. In step 198 the match to the available words is determined. If no match is found, the process proceeds to step 201 to return to the program with an indication that a match was not found. If a match was found, the process goes to step 199 to return the requirement indicator. The process then advances to step 178 (Fig. 1C) to insure that a match has occurred. If the match has occurred, the process then continues to node 179 (Fig. 1F). If no such match has occurred, the process continues to step 174 to indicate an error condition. Upon completing node B7, step 179, the process then returns to step 168. When all of the input information for all of the pointers has been completed, the process returns through step 165 to the return 166 which returns the process to either steps 142 or steps 148 as previously discussed.

The procedures of Figs. 1C, 1D, 1E and 1F have thus taken each individual piece of information from the user input data and converted this information through the syntactical requirements of the language into the syntax buffer to build the instruction 92 of Fig. 5. It should be apparent to those skilled in the art that the addition of quotes, commas and spaces in accordance with the predetermined syntax is accomplished by the software and therefore removes this burden from the user or operator.

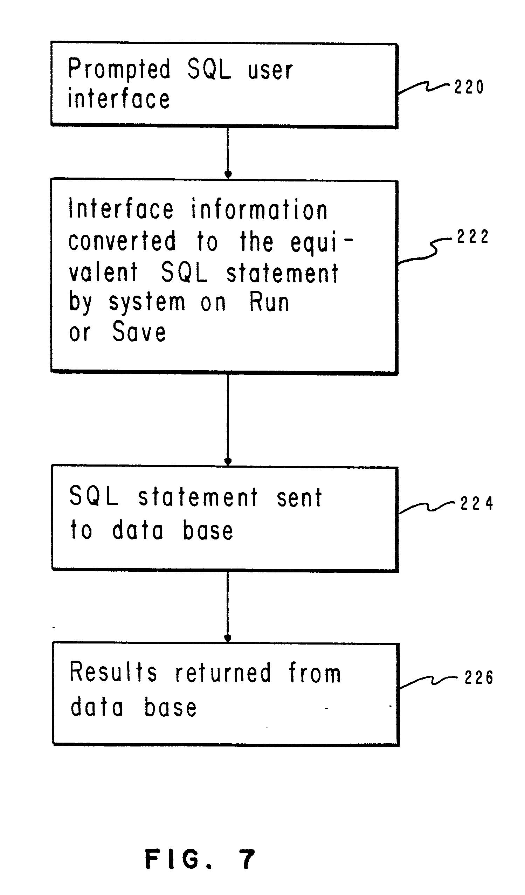

Fig. 7 is an overall block diagram of the relationship between the user interface and the data base application program. In block 220, the user is prompted through the SQL interface. In block 222, this interface information provided by the user or operator is then converted to the equivalent SQL statement. The SQL statement is then stored as a result of a saved command or executed as the result of a run command. When a run command is executed, the SQL statement is sent to the data base, block 224, for execution. The results are then returned from the data base, block 226, to be displayed to the user.

In this embodiment, the command area to receive input was indicated by a cursor. The location of this cursor can be controlled by the operator. It should be apparent to those skilled in the art that other means can be used to indicate the command area designated for input data such as a highlighted command area, blinking, or reverse video. Also, other means beside cursor control can be used by the operator to designate the command area for input such as a position sensitive touch screen, keyboard input, or mouse.

Although the invention has been described with reference to this specific embodiment, this description is not meant to be construed in a limiting sense. Various modification of the disclosed embodiment, as well as other embodiments of the invention, will become apparent to those persons skilled in the art upon reference to the description and fall within the scope of the appended claims.

## Claims

1. Data processing apparatus arranged to execute complex instruction statements if such conform to a predetermined syntax whether presented unitarily as such or aggregated by interaction between the operator and an incorporated aid, the apparatus including both operator input means and display means, the aid, when used, causing

the displaying of a first screen portion having a plurality of command areas, a designation of one of the command areas, and a second screen portion of input data alternatives for the designated command area;

upon receiving information from the operator containing input data for the designated command area, the updating of the first screen portion to reflect such input data, the designating of a next command area and the changing of data alternatives of the second screen portion to a set appropriate to such next command area; and

the latter operations being repeated until all of the commands for the instruction statement have been input whereby the command is aggregated in a manner conforming to the predetermined syntax even though the operator may be unaware of that syntax.

2. Apparatus as claimed in Claim 1 which will accept information from the operator designating a next command area, the designated command area alternatives in the second screen portion changing correspondingly.

3. Apparatus as claimed in Claim 2 wherein the operator can designate command areas by means of a cursor.

4. Apparatus as claimed in Claim 3 wherein potential input data for the designated command area is contained in the second screen portion and thus can be input by the operator by means of cursor location in the second screen portion designating such.

5. Apparatus as claimed in any preceding Claim wherein the second screen portion includes assistance information to aid the operator in providing the input data.

6. Apparatus as claimed in any preceding Claim wherein each of the command areas in the first screen portion include a description of the command.

7. Apparatus as claimed in any preceding Claim wherein the instruction statement, itself, is displayed when all of the commands for the instruction have been input.

8. Apparatus as claimed in any preceding claim wherein, as a preliminary set-up operation, a prior display is progressively created repeatedly prompting the operator to provide input data and displaying such input data received from the operator in response to the menu, this prior display being wiped, when complete, and replaced by the two screen portion display of the preceding claims which is generated from the cummulative prior input operator data.

9. Apparatus as claimed in Claim 8 wherein the prior display comprises a series of menus, each menu being dependent upon its predecessor, prompting the operator for input data and being in part retained to display the order of generation of the series of menus and the input data provided by the operator in response to each menu of the series.

10. Apparatus as claimed in Claim 9 wherein each successive menu in the series is displayed as overlapping a preceding menu though in such a manner that at least a portion of a preceding menu's prompt information remains displayed.

FIG. 1A

FIG.1B

B4 ~160

Acquire DB info using table/ view names ~162

Search buffers to set pointers for command descriptors ~163

Use each pointer in order ~164

End of pointers ? ~165 — Yes → Return ~166

No

B7 ~167

Parse for non-blank character group or end of pointer ~168

Yes ← End of Pointer ~169

No ~170

Yes ← Active Requirement Indicator — No

Indicator Requires Column Name ? ~171 — No

Yes

B5 ~172

Match ? ~173 — No → Error ~174

Yes

B7 ~175

Indicator Requires Reserved Word ? ~176 — No

Yes

B6 ~177

Match ~178 — No

Yes

B7 ~179

B7 ~180

B5 ~181

Match for column Name ~182 — No

Yes

B7 ~183

B6 ~184

Match for Reserved Load ~185 — No

Yes

B7 ~186

Error ~187

FIG. 1C

B5 *188

*189

Process for column
name match

*190

Match
?

No

Yes

*191

Return
Not Found

*192

Return Data Type

**FIG. 1D**

B6 *196

*197

Process for Reserved
word or symbol
Match

*198

Match
?

No

Yes

*201

Return
Not Found

*199

Return Require-
ment Indicator

**FIG. 1E**

B7 *193

Build into Syntax
buffer

*194

Return

*195

**FIG. 1F**

**Main Panel**

Choose

Query

Object

Object

Object

14

12

10

16

Choose one:

> Create

Alter

Drop

Run

20

18

22

Choose tables or
views to query:

> TABLE 1
VIEW 1234
TABLE 2
TABLE 3
TABLE 4

26

24

28

Choose column
names from
TABLE 1 :

All (*)

> LAST_NAME
> FIRST_NAME
> EMPLOYEE_NUM
ADDRESS

30

32

F1 = Help   F8 = Catalog   F10 = Commands

34        36        38

39

0 292 647

**FIG. 2**

Create Query name ———————————————— 40

Select: LAST_NAME FIRST_NAME EMPLOYEE_NUM    SELECT OPTIONS: 44

52 [cursor anywhere in this area]

From: TABLE1 54

Where: 56

42

Order by: 58

Group by: 60

Having: 62

SELECT OPTIONS: 44

Avg
Sum
Count
Min
Max                    64
Distinct
Count (Distinct)
Count (*)
+ Add
— Subtract
* Multiply
/ Divide

0 292 647

F1=Help  F3=Undo  F4=Save  F6=Options  F8=Catalog  F9=View SQL  F10=Commands

45

**F I G.   3A**

Create Query name ⌐40

Select: LAST_NAME FIRST_NAME EMPLOYEE_NUM

WHERE OPTIONS:                68

From: TABLE1

Where: LAST_NAME = SMITH

42

[cursor anywhere in this area]

66

Order by:

Group by:

Having:

= Equal
<>Not Equal
> Greater Than
< Less Than
>= Greater Than or Equal
<=Less Than or Equal
Between
In [ ]
Like [   ]
Is Null
And
Or
No
(
)

70

0 292 647

F1=Help F3=Undo F4=Save F6=Options F8=Catalog F9=View SQL F10=Commands

FIG. 3B

Create Query name — $5^{40}$

| | |
|---|---|
| Select: LAST_NAME FIRST_NAME EMPLOYEE_NUM | ORDER BY OPTION: |
| | |
| <u>42</u> | Ascending |
| | Descending |
| From: TABLE 1 | |
| | |
| Where: LAST_NAME = SMITH | <u>72</u> |
| | |
| Order by: FIRST_NAME ASCENDING | |
| [cursor anywhere in this area ] ⁓ 74 | |
| Group by: | |
| | |
| Having: | |

F1=Help  F3=Undo  F4=Save  F6=Options  F8=Catalog  F9=View SQL  F10=Commands
└78        └79                                    └76

FIG. 3C

0 292 647

| LAST_NAME | FIRST_NAME | EMPLOYEE_NUM | ADDRESS |
|-----------|------------|--------------|---------|
| 46 | 48 | 50 | 90 |
| Smith | Zelda | 123456 | 1122 Anywhere St. |
| Smith | Abraham | 234567 | 3344 Nowhere St. |
| Jones | Kirk | 345678 | 0033 Anytime St. |
| Smith | Raymond | 456789 | 3300 Sometime St. |
| Smith | Caldwell | 567890 | 9999 Always St. |

82    84    86   88    80

**FIG. 4**

SELECT LAST_NAME, FIRST_NAME, EMPLOYEE_NUM FROM TABLE1 WHERE
LAST_NAME = "SMITH" ORDER BY FIRST_NAME ASCENDING

92

**FIG. 5**

0 292 647

| LAST_NAME | FIRST_NAME | EMPLOYEE_NUM |
|---|---|---|
| *46* | *48* | *50* |
| Smith | Abraham | 234567 |
| Smith | Caldwell | 567890 |
| Smith | Raymond | 456789 |
| Smith | Zelda | 123456 |
| *202* | *204* | *206* |

*200*

# FIG. 6

Prompted SQL user interface — 220

Interface information converted to the equivalent SQL statement by system on Run or Save — 222

SQL statement sent to data base — 224

Results returned from data base — 226

## FIG. 7